# EUROPÄISCHE PATENTANMELDUNG

(11) **EP 4 730 006 A1**
(43) Veröffentlichungstag der Anmeldung: **22.04.2026**
(21) Anmeldenummer: 25207480.2
(22) Anmeldetag: 08.10.2025
(51) Int. Cl.: G02B 6/44

(54) **SPLEISSMODULE**

(30) Priorität: 15.10.2024 DE 102024129814
(71) Anmelder: trans data elektronik Gmbh, 49626 Bippen (DE)
(72) Erfinder: Engel, Andreas, 44135 Dortmund (DE)
(74) Vertreter: Meissner Bolte Düsseldorf Patentanwälte Rechtsanwälte Partnerschaft mbB

(57) **Zusammenfassung**

Die vorliegende Erfindung betrifft Spleißmodule, insbesondere für den Einbau in Modulträgern, die konfiguriert sind, in ihrem Inneren jeweils bis zu 24 Lichtwellenleiter, insbesondere in Form von Pigtails, aufzunehmen und die so dimensioniert sind, dass acht von ihnen in einen Modulträger von 19" Breite und einer Höheneinheit eingebaut werden können.

## Beschreibung

Alle in der vorliegenden Anmeldung zitierten Dokumente sind durch Verweis vollumfänglich in die vorliegende Offenbarung einbezogen (= incorporated by reference in their entirety).

Die vorliegende Erfindung betrifft Spleißmodule, insbesondere für den Einbau in Modulträgern, die konfiguriert sind, in ihrem Inneren jeweils bis zu 24 Lichtwellenleiter, insbesondere in Form von Pigtails, aufzunehmen und die so dimensioniert sind, dass acht von ihnen in einen Modulträger von 19" Breite und einer Höheneinheit eingebaut werden können.

### Stand der Technik:

Verteilerfelder bestehend aus Modulträgern und Modulen zur Verteilung bzw. Verbindung von Anschlüssen sind bekannt. Auch Modulträger, die auf 19"-Einbaubreite und einer Höheneinheit (1HE) bis zum 8 Module umfassen sind bekannt, zum Beispiel aus EP 2 241 114 A1 oder EP 2 241 115 A1. Module dieser Größe werden oft auch 0,5 HE-Module genannt, weil von diesen Modulträgern auf einer Höheneinheit zwei Module übereinander angeordnet werden können.

Um (sich ändernden) Gegebenheiten vor Ort anpassen zu können werden insbesondere in der Telekommunikationstechnik auch Lichtwellenleiter verschiedener Herkunft miteinander verbunden. Dies nennt man auch Spleißen.

Für diesen Zweck gibt es am Markt verschiedene Spleißaufnahmevorrichtungen, also Gehäuse, die die zu verbindenden bzw. dann auch die verbundenen Lichtwellenleiter aufnehmen können. Diese sind oft sehr groß bzw. nicht in der Lage viele solche Lichtwellenleiter aufzunehmen. Überdies sind dies meist Stand-alone-Lösungen.

Als Beispiele für Dokumente des Standes der Technik könnten DE 20 2015 102 951 U1 oder DE 10 2012 206 743 A1 genannt werden.

Es besteht am Markt ein immer weiterwachsendes Bedürfnis nach verbesserten Spleißaufnahmevorrichtungen.

### Aufgabe:

Aufgabe der vorliegenden Erfindung war es demgemäß, bisherigen Stand der Technik zu verbessern und Vorrichtungen zur Verfügung zu stellen, welche die steigenden Anforderungen des Marktes befriedigen können und technisch, ökonomisch vorteilhaft sind.

Weitere Aufgaben ergeben sich für den Fachmann bei Betrachtung der Ansprüche und aus der nachfolgenden Beschreibung.

### Lösung:

Diese und weitere Aufgaben, die sich für den Fachmann aus der vorliegenden Beschreibung ergeben, werden durch die in den unabhängigen Ansprüchen dargestellten Gegenstände gelöst.

Bevorzugte und besonders vorteilhafte Ausführungsformen sind in den abhängigen Ansprüchen sowie der folgenden Beschreibung dargestellt.

### Detaillierte Beschreibung der Erfindung:

Im Rahmen der vorliegenden Erfindung werden "Lichtwellenleiter", die in den erfindungsgemäßen Spleißmodulen innen an den Steckerkupplungen befestigt sind und zum Spleißen mit anderen von außen (hinten) in das Gehäuse einzuführenden Lichtwellenleitern gedacht sind, auch mit der etwas spezifischeren Bezeichnung "Pigtails" benannt. Pigtails sind im Rahmen der vorliegenden Erfindung (wie auch sonst vom Fachmann verstanden) also einseitig mit LWL-Stecker (vor-)konfektionierte (kurze Stücke) Lichtwellenleiter.

Im Rahmen der vorliegenden Erfindung werden die Begriffe "Spleißhalter", "Spleißrahmen" als Synonyme verstanden.

Im Rahmen der vorliegenden Erfindung werden der Begriff "Höheneinheit" und dessen Abkürzung "HE" verwendet, wie fachüblich und standardisiert (zum Beispiel in DIN 41494), d. h. die Höhe eines Geräts in der 19-Zoll-Technik beschreibend und entsprechend 44,45 Millimeter bzw. 1 ¾ Zoll.

Die vorliegende Erfindung betrifft in einem ersten wesentlichen Gegenstand ein Spleißmodul, dass so dimensioniert ist, dass acht solche Module in einen Modulträger von 19" Breite und einer Höheneinheit eingebaut werden können Bevorzugt wird dieses Spleißmodul zur Verwendung in modularen Verteilerfeldern, insbesondere in 19"-Modulträger mit einer Höheneinheit Höhe und Vorsehungen für acht Module in zwei Reihen à vier Stück übereinander bereitgestellt, wobei zwei übereinanderliegende Vorsehungen des Modulträgers aber auch zu einer doppelt so hohen Vorsehung änderbar sein können.

Die erfindungsgemäßen Spleißmodule umfassen
- ein Gehäuse, konfiguriert in seinem Inneren bis zu 24 Lichtwellenleiter, insbesondere in Form von Pigtails, aufzunehmen;
- optional bis zu 24, insbesondere genau 24, im Inneren des Spleißmoduls angeordnete und mit einer gleichen Anzahl frontseitiger Steckerkupplungen verbundene Lichtwellenleiter, wobei die Lichtwellenleiter insbesondere in Form von Pigtails vorliegen;
- eine im Inneren des Moduls angeordnete Spleißkassette mit mindestens einem Spleißhalter;
- an der rückwärtigen Seite des Gehäuses ein oder mehrere Anschlussbuchsen/Einführungen für Flexschläuche, bevorzugt 5.0 mm-Schläuche, oder Röhrchen, wobei diese bevorzugt von oben in die Anschlussbuchsen/Einführungen eingedrückt und arretiert werden und gegebenenfalls mit Kabelbindern oder ähnlichem fixiert werden können.

Im Rahmen der vorliegenden Erfindung ist es bevorzugt, wenn im Inneren des erfindungsgemäßen Spleißmoduls bis zu 24, insbesondere genau 24, Lichtwellenleiter angeordnet und mit einer gleichen Anzahl frontseitiger Steckerkupplungen verbunden sind. Dabei liegen die Lichtwellenleiter insbesondere in Form von Pigtails vor.

Das bedeutet, dass die erfindungsgemäßen Spleißmodule bevorzugt direkt schon mit Lichtwellenleitern/Pigtails vorliegen, diese also bevorzugt als Teil der erfindungsgemäßen Spleißmodule angesehen werden.

Im Rahmen der vorliegenden Erfindung können die erfindungsgemäßen Spleißmodule alle gängigen Steckerkupplungen aufweisen.

Bevorzugt ist es in einer Ausführungsform der vorliegenden Erfindung, wenn der Spleißhalter für jeden Lichtwellenleiter eine Aufnahme aufweist bzw. im Falle von mehreren Spleißhaltern, diese in Summe für jeden Lichtwellenleiter eine Aufnahme aufweisen. In manchen Ausführungsformen wird das Spleißmodul direkt mit einem oder mehreren, insbesondere zwei, Spleißhaltern (Spleißrahmen) bereitgestellt, so dass 24 Spleiß-Aufnahmen vorhanden sind.

In bevorzugten Ausführungsformen der vorliegenden Erfindung ist das Gehäuse des Spleißmoduls oben öffenbar. Weiter bevorzugt ist dabei sein Deckel aufgelegt und nur an der Gehäuserückseite durch eine Deckelbefestigungsvorrichtung, bevorzugt durch eine Schraube oder Klemmvorrichtung, insbesondere Schraube, befestigt. Der Deckel kann dabei Positionierungshilfen wie (Blech-)Nasen oder Ähnliches aufweisen und das Gehäuse gegebenenfalls entsprechende Gegenstücke; beispielsweise können im Gehäuse (Blech-)Ausbuchtungen vorgesehen sein, in die dann am Deckel angeformte Blechnasen eingreifen können.

In Varianten der vorliegenden Erfindung kann die Deckelbefestigungsvorrichtung so ausgestaltet sein, dass neben dem Gehäusedeckel gleichzeitig auch die Spleißkassette fixiert wird.

In bevorzugten Ausgestaltungen der vorliegenden Erfindung ist die Deckelbefestigungsvorrichtung als Langloch/Schrauben-Kombination ausgestaltet, derart, dass in dem Spleißmodulgehäuse, und gegebenenfalls der Spleißkassette, ein Schraubgewinde (bzw. jeweils eins) gefertigt ist, dass (die) durch eine Schraube verbunden wird (werden). Der Gehäusedeckel weist dazu passend eine nach unten hinter das Gehäuseende oder vor diesem in das Gehäuse nach unten ragende Lasche mit Aussparung für den Schraubkanal auf, und durch Anziehen der Schrauben wird dann der Gehäusedeckel, und gegebenenfalls die Spleißkassette, befestigt.

In weiteren bevorzugten Ausführungsformen der vorliegenden Erfindung ist die Spleißkassette als entfernbares oder, gegebenenfalls um ein Scharnier, klappbares Element ausgestaltet.

In bevorzugten Ausführungsformen der vorliegenden Erfindung ist die Spleißkassette kürzer als das Spleißmodulgehäuse, mit bevorzugt etwa 40 bis 90% der Gehäuselänge, insbesondere etwa 50% der Gehäuselänge, und ist so angeordnet, dass ihr Hauptteil im hinteren Teil des Spleißmodulgehäuses angeordnet ist. In spezifischen Ausführungsformen kann die Spleißkassette zum Beispiel 120 mm lang sein, wenn das Spleißmodulgehäuse 180 mm lang ist.

In noch weiteren bevorzugten Ausführungsformen der vorliegenden Erfindung ist unter der Spleißkassette im Gehäuse freies Volumen gegeben, zum Teil unter der Spleißkassette und zum Teil auch vor ihr, in dem Überlängen der Lichtwellenleiter/Bündeladern zumindest zum Teil abgelegt werden können.

In weiteren bevorzugten Ausführungsformen der vorliegenden Erfindung ist die Spleißkassette als hochklappbares Blech ausgestaltet, wodurch das Spleißmodul bevorzugt in zwei Ebenen unterteilt wird, nämlich die "Spleißkassetten-Ebene*", in der die Spleiße in den Spleißhaltern zu liegen kommen und die "Volumen-Ebene", die freies Volumen und mithin Platz für Bündeladern und Überlängen der Lichtwellenleiter bzw. Pigtails bereitstellt. Unter der Spleißkassette lassen sich mithin die Überlängen ablegen - wobei genügend Raum ist, dies unter Berücksichtigung der Mindestbiegeradien vorzunehmen.

In bevorzugten Ausführungsformen der vorliegenden Erfindung lassen sich in (bzw. an/auf) der Spleißkassette sich 2x Spleißhalter für Crimpspleißschutz befestigen.

In weiteren bevorzugten Ausführungsformen der vorliegenden Erfindung ist die Spleißkassette konfiguriert, zwei oder mehr, bevorzugt zwei, Spleißhalter aufzuweisen, die optional jeweils variabel angeordnet werden können, bevorzugt über jeweilige Befestigungsvorrichtungen von Spleißhalter an Spleißkassette, bevorzugt Schraubverbindungen.

In weiteren bevorzugten Ausführungsformen der vorliegenden Erfindung ist der Gehäuseboden am rückwärtigen Gehäuseende höher gelegen als an der Frontseite des Gehäuses. D.h. das Gehäuse ist hinten dicker als vorne. Dies kann graduell in Form eines schräg nach hinten, oben führenden Gehäusebodens erfolgen. Bevorzugt ist es aber, wenn der Gehäuseboden zunächst gerade nach hinten von der Frontseite fortführt (also in Bezug auf die durch die Frontseite aufgespannte Ebene rechtwinklig nach hinten) und dann nach (etwa) der Hälfte der Gehäusetiefe eine schräge oder rechtwinklige Stufe im Gehäuseboden (nach oben) vorgesehen ist, und dann anschließend an diese Stufe der Gehäuseboden parallel zu der anfänglichen Gehäusebodenfläche gerade zum rückwärtigen Ende des Spleißmodulgehäuses führt.

In manchen bevorzugten Ausführungsformen sind die erfindungsgemäßen Spleißmodule zwischen 90 mm und 270 mm lang, zwischen 50 mm und 150 mm breit und zwischen 15 mm und 25 mm hoch, wobei das hintere Ende um bis zu 20% weniger breit und bis zu 50 weniger hoch sein kann.

Bevorzugt sind die erfindungsgemäßen Spleißmodule in ihrer Breite so dimensioniert, dass vier von ihnen nebeneinander in einen Modulträger von 19" Breite eingepasst werden und in ihrer Höhe an der Vorderseite so dimensioniert, dass zwei von ihnen übereinander in einer Höheneinheit (HE) angeordnet werden können. Die definitiv genauen Maße, also auf den Millimeter bzw. Millimeterbruchteil genau, sind abhängig vom verwendeten 19", 1HE-Modulträger und der Art und Weise, wie die Module an/in diesem befestigt werden, und vom Fachmann einfach zu bestimmen.

Spezifische Beispiele für erfindungsgemäße Spleißmodule weisen die folgenden Dimensionen auf: 180 mm Gesamtlänge und sowie 100,8 mm Breite und 20,5 mm Höhe am vorderen Ende, sowie 90,55 mm Breite und 14,5 mm Höhe am hinteren Ende. Diese Dimensionen dienen lediglich der Illustration und sind für einen spezifischen Modulträger angepasst. Die Erfindung ist ausdrücklich nicht auf diese genauen Dimensionen beschränkt.

Die erfindungsgemäßen Module können zum Beispiel am vorderen Ende auch 80 mm bis 120 mm breit sein; können zum Beispiel am hinteren Ende auch 70 mm bis 110 mm breit sein; sie können zum Beispiel am vorderen und hinteren Ende auch gleich breit 80 mm bis 120 mm oder 90 mm bis 110 mm breit sein; sie können zum Beispiel am vorderen Ende auch 15 mm bis 25 mm hoch sein; sie können zum Beispiel am hinteren Ende auch 10 mm bis 20 mm hoch sein; sie können zum Beispiel am vorderen und hinteren Ende auch gleich hoch 15 mm bis 25 mm oder 10 mm bis 20 mm hoch sein; sie können zum Beispiel auch 150 mm bis 250 mm Gesamtlänge aufweisen; sie können zum Beispiel Spleißkassetten einer Länge von 100 mm bis 140 mm aufweisen (insbesondere unter Berücksichtigung der oben genannten prozentualen Relationen). Diese Zahlenangaben schließen zwar bevorzugte Bereiche ein beziehungsweise stellen solche dar, sie schränken aber die Erfindung nicht auf diese Bereiche ein.

Entsprechend ist die Spleißkassette in dieser Ausführungsform durch den im hinteren Gehäuseteil höheren Boden im vorderen Teil, soweit die Spleißkassette länger als der hintere Teil ist oder so angeordnet ist, dass ein Teil in den vorderen Teil übersteht, mit einem entsprechenden Abstand zum vorderen Gehäuseboden angeordnet. Das so erzeugte freie Volumen kann dann die Pigtail-Kabel bzw. Überlängen aufnehmen, wobei diese idealerweise kreisförmig entlang der Gehäusewände geführt werden.

In noch weiteren bevorzugten Ausführungsformen der vorliegenden Erfindung weist das Gehäuse an der Frontseite zwei oder mehr, bevorzugt zwei, Vorrichtungen zur Verbindung mit dem Modulträger auf, bevorzugt Aufnahmen für Arretierungsmittel, besonders bevorzugt Löcher, zum Beispiel Rastlöcher oder Gewindelöcher. Falls die Vorrichtungen zur Verbindung mit dem Modulträger einfach Löcher sind und keine Rastlöcher oder Gewindelöcher, mittels deren und Rastelemente oder Schrauben das Spleißmodul am Modulträger fixiert werden kann, dann ist es insbesondere bevorzugt, wenn das Spleißmodulgehäuse die nachfolgend beschriebenen passiven Klemmvorrichtungen/Klemmvorrichtungselemente aufweist.

In noch weiteren bevorzugten Ausführungsformen der vorliegenden Erfindung weist die Spleißkassette eines oder mehrere der Merkmale
- ein oder mehr Ausstanzungen oder Laschen zur Befestigung der Lichtwellenleiter/Pigtails, zum Beispiel mittels Kabelbindern,
- zwei oder mehr Anordnungshilfen für Lichtwellenleiter/Pigtails auf der Spleißkassette,
- eine Scharniervorrichtung zur schwenkbaren Verbindung mit dem Gehäuse auf.

Es sei darauf hingewiesen, dass es im Rahmen der vorliegenden Erfindung eine untergeordnete Rolle spielt, ob das Scharnier primär (zuerst) an der Spleißkassette oder dem Gehäuse montiert ist und danach mit dem anderen Bauteil verbunden wird. Es ist auch möglich, auf das Scharnier ganz zu verzichten, die Spleißkassette wäre dann entweder gar nicht schwenkbar, sondern einfach heraushebbar, und/oder zum Beispiel um auflagepunkte lose schwenkbar.

In noch weiteren bevorzugten Ausführungsformen der vorliegenden Erfindung weisen die Gehäuseseiten jeweils mindestens ein passives Klemmvorrichtungselement, bevorzugt Vertiefungen oder einen in Richtung Gehäusemitte vertieften Absatz, auf. Diese sind insbesondere so konfiguriert, dass zur Arretierung des Spleißmoduls Federn oder Klammern eines Modulträgers eingreifen oder einrasten können. Der in Richtung Gehäusemitte vertiefte Absatz kann derart ausgestaltet sein, dass die Gehäuseseitenwände vor und hinter dem Absatz jeweils zwei parallele Flächen ausbilden, wobei die an der Spleißmodulgehäuserückseite endende Fläche im Vergleich zu der an der Spleißmodulgehäusefrontseite beginnenden Fläche in Richtung der Gehäusemitte zurückgesetzt ist

Die Befestigung der Spleißmodule im Modulträger erfolgt in bevorzugten Varianten der vorliegenden Erfindung mithilfe der passiven Klemmvorrichtungselemente über eine Art Snap-In-Vorrichtung. Dazu weist der Modulträger bevorzugt Verrieglungen aus Federstahl auf.

Dabei können die Federn auch als Erdungskontaktierung dienen.

Weiterer Gegenstand der vorliegenden Erfindung sind bestückte 19" 1HE-Modulträger umfassend bis zu 192 Lichtwellenleiter in bis zu acht erfindungsgemäßen Spleißmodulen, die jeweils bis zu 24 Lichtwellenleiter enthalten.

Die vorliegende Erfindung betrifft zudem Verteilerfelder zur Verbindung mit weiteren modularen Verteilerfeldern oder mit weiterführenden Leitungen oder Endgeräten, welche aus in Modulträgern und darin angeordneten erfindungsgemäßen Spleißmodulen aufgebaut sind.

Das Bestücken und Spleißen der Spleißmodule kann außerhalb von Modulträgern bzw. Verteilerfeldern erfolgen, wodurch die Montage wesentlich erleichtert wird, sowie weiterhin der Zeitaufwand und Faserbeschädigungen minimiert werden.

Nicht zuletzt Gegenstand der vorliegenden Erfindung ist die Verwendung der erfindungsgemäßen Spleißmodule in Modulträgern, Verteilerfeldern bei und für festen und/oder mobile Verkabelungen.

In manchen bevorzugten Ausführungsformen der vorliegenden Erfindung ist das Gehäuse des Spleißmoduls aufgebaut aus
- einem Modulgehäusehauptelement umfassend Boden, beide Seitenwände und optional, aber bevorzugt, Rückseite;
- einer frontseitigen Blende;
- einem Gehäusedeckel;

wobei die frontseitige Blende mit Steckerkupplungen versehen ist oder konfiguriert ist, mit Steckerkupplungen versehen zu werden, und
wobei das Spleißmodul an seiner Frontseite Vorrichtungen zur Verbindung mit dem Modulträger aufweist.

Wesentliches Alleinstellungsmerkmal der vorliegenden Erfindung ist die extrem hohe Packungsdichte bei gleichzeitig hoher Modularität.

Eine so hohe Packungsdichte (auch Packungseffizienz genannt), wie mit den erfindungsgemäßen Modulen zu erreichen, ist nicht trivial.

Denn, obwohl Biegeradien bei den Lichtwellenleitern zu berücksichtigen sind, müssen trotzdem ausreichend Überlängen im Modul angeordnet werden können, damit vor Ort entsprechende Spleißverbindungen erreicht werden können.

Es wird im Rahmen der vorliegenden Erfindung erstmalig erreicht, dass in Modulträgern von 19" Breite und 1 HE bis zu 192 Spleißverbindungen erreicht werden können.

Dies wird durch die erfindungsgemäßen Spleißmodule erreicht, die derart konfiguriert sind, dass sie bis zu 24 entsprechende Lichtwellenleiter (Pigtails) aufnehmen können.

Bevorzugt (aber nicht zwangsweise) sind dazu die erfindungsgemäßen Spleißmodule in einer erfindungsgemäßen Ausführungsform länglich ausgestaltet.

Das Verhältnis von Länge zu Breite der erfindungsgemäßen Spleißmodule beträgt in bevorzugten Varianten zwischen 1,3:1 bis 2,5:1, besonders bevorzugt zwischen 1,6:1 und 2:1, insbesondere zwischen 1,7:1 und 1,9:1 und höchst bevorzugt etwa 1,8:1. Im Vergleich zu Standardmodulen des gleichen Modulsystems sind die Spleißmodule bei gleicher Breite und Höhe bevorzugt etwa 50 bis 100% länger, und umfassen eine Spleißkassette, die das Modulinnere in die zwei oben genannten Ebenen unterteilt, wodurch ausreichend Raum für die Pigtails/Überlängen im Inneren des Gehäuses geschaffen ist.

In bevorzugten Ausführungsformen werden an der Frontseite des Gehäuses in dieser Ausführungsform auf einer halben Höheneinheit (HE), d.h. etwa 20 mm, zwei Reihen à sechs Duplex-Steckerkupplungen (zum Beispiel LC Duplex) übereinander angeordnet.

Zum Schutz der gespleißten bzw. zu spleißenden LWL in den Spleißhalter wird bevorzugt auch Spleißschutz bereitgestellt. Diese Spleißschutze können in den jeweiligen Spleißhalter integriert sein, oder zusätzliche Werkstücke sein.

Erfindungsgemäß verwendbar sind zum Beispiel Crimpspleißschutze oder Schrumpfspleißschutze.

In bevorzugten Ausführungsformen der vorliegenden Erfindung werden Crimpspleißschutze vorgesehen.

Im Bereich von Fusions-Spleißstellen sind die Glasfaser nach dem Spleißvorgang nicht durch das Primärcoating bzw. die LWL-Hülle geschützt. Sowohl Feuchtigkeit als auch mechanische Beanspruchung (Stress/Bending) auf der Faser können zu Dämpfungserhöhungen und somit zu einer Beeinträchtigung der Übertragungsqualität führen. Daher braucht die ungeschützte Spleißstelle anschließend einen LWL-Spleißschutz. Der Spleißschutz wird demgemäß nach dem Spleißvorgang auf die Spleißstelle aufgebracht und schützt diese somit gegen Feuchtigkeit und mechanische Beanspruchung (Stress/Bending). Ein Crimpspleißschutz besteht zum Beispiel aus V-förmigen, gegebenenfalls mit dauerelastischer Masse beschichtetem, Metallwerkstück oder entsprechenden Kunststoffwerkstücken. Durch verkrimpen mit speziellen Krimppressen wird der Spleißschutz dann verschlossen und umschließt die Spleißstelle, wodurch diese dann geschützt ist.

Die einzelnen (Crimp-)Spleißschutze sind in ihren Dimensionen an den jeweils verwendeten Spleißhalter angepasst.

Das erfindungsgemäße Spleißmodul stellt also im Prinzip eine Spleißbox dar, die zur Verwendung/Anordnung in Verteilerfeldern/Modulträgern angepasst wurde, wobei es überraschend war, dass die erfindungsgemäßen Rahmenbedingungen - bis zu 24 Lichtwellenleiter/Pigtails in einem Modul - umgesetzt werden konnten.

Die Vorrichtungen zur Verbindung der Spleißmodule mit dem Modulträger sind in bevorzugten Ausführungsformen der vorliegenden Erfindung Aufnahmen für Arretierungsmittel.

In besonders bevorzugten Ausführungsformen der vorliegenden Erfindung sind die Vorrichtungen zur Verbindung mit dem Modulträger in der durch die Frontseite gebildeten Fläche angeordnet. Weiterhin bevorzugt ist es, dass die Vorrichtungen zur Verbindung mit dem Modulträger keine über die durch die Seitenflächen des Spleißmoduls aufgespannten Ebenen herausragenden Elemente sind, insbesondere keine seitlich überstehenden Laschen bilden.

Die erfindungsgemäßen Spleißmodule weisen in bevorzugten Ausgestaltungen keine seitlich überstehenden Vorrichtungen zur Befestigung am Modulträger auf, insbesondere keine Laschen.

Erfindungsgemäß sind die Vorrichtungen zur Verbindung mit dem Modulträger also insbesondere die weiblichen Teile der Spleißmodul-Modulträgerverbindung.

In manchen Ausführungsformen der vorliegenden Erfindung weist das Modulgehäusehauptelement an seinen Seiten jeweils
- gehäusefrontseitige seitliche Aufnahmen für Arretierungsmittel zur Arretierung an oder Verbindung mit Befestigungs- oder Trägerkonstruktionen, und/oder
- gehäuserückseitige seitliche Aufnahmen für Arretierungsmittel zur Arretierung an oder Verbindung mit Befestigungs- oder Trägerkonstruktionen, und/oder
- gegebenenfalls zusätzlich seitliche Hilfs-Aufnahmen für Arretierungsmittel zur Arretierung an oder Verbindung mit Befestigungs- oder Trägerkonstruktionen, die zwischen den gehäusefrontseitigen seitlichen Aufnahmen für Arretierungsmittel zur Arretierung an oder Verbindung mit Befestigungs- oder Trägerkonstruktionen und gehäuserückseitige seitliche Aufnahmen für Arretierungsmittel zur Arretierung an oder Verbindung mit Befestigungs- oder Trägerkonstruktionen angeordnet sind,
auf.

Das Modulgehäusehauptelement ist in einigen bevorzugten Ausführungsformen der vorliegende Erfindung U-förmig ausgestaltet und umfasst Boden und zwei Seitenwände, sowie gegebenenfalls die rückseitige Gehäusewand. Bei diesen Varianten ist es optional aber bevorzugt (um die Lichtwellenleiter zu schützen), das Modulgehäuse vor Verwendung mit einem Deckel zu versehen. Der Deckel kann dann einfach zu montieren und zu demontieren sein und zum Beispiel über Schnappverschlüsse oder Schrauben, oder ähnliches, am Modulgehäusehauptelement befestigt werden (siehe weiter oben).

Es ist aber ebenso möglich, das Modulgehäusehauptelement aus einem Stück zu fertigen.

Die erfindungsgemäßen Modulträger sind bevorzugt so dimensioniert, dass pro Höheneinheit HE und 19,2 Zoll Breite im Modulträger übereinander zwei Reihen á vier erfindungsgemäße Spleißmodule angeordnet werden können, also bei einer HE und 19,2 Zoll Breite des Modulträgers acht erfindungsgemäße Spleißmodule bestückt werden können.

Die Arretierungsmittel zur Arretierung der Spleißmodule am Modulträger sind im Prinzip nicht beschränkt und können beliebige fachübliche Mittel sein; es ist lediglich erforderlich, dass diese in die/zu den Aufnahmen für Arretierungsmitteln an den erfindungsgemäßen Spleißmodulen passen.

Bevorzugt sind die Arretierungsmittel zur Arretierung der Spleißmodule am Modulträger ausgewählt aus der Gruppe bestehend aus Schrauben, Nieten, Stifte (Pins), Laschen, Federstifte, besonders bevorzugt Stifte (Pins) oder Schrauben, insbesondere Schrauben.

Diese Arretierungsmittel zur Arretierung der Spleißmodule am Modulträger sind komplementär zu den am Spleißmodul befindlichen Vorrichtungen zur Verbindung mit dem Modulträger, insbesondere den Aufnahmen für Arretierungsmittel, und stellen die jeweils männlichen Teile der Spleißmodul-Modulträgerverbindung dar.

Insofern können zum Beispiel am Modulträger vorgehsehen Stifte vorhanden sein, auf die die jeweiligen Spleißmodule mit ihren Vorrichtungen zur Verbindung mit dem Modulträger, insbesondere den Aufnahmen für Arretierungsmittel, geschoben werden. In anderen Varianten werden die erfindungsgemäßen Spleißmodule zum Beispiel so im Modulträger angeordnet, dass die Vorrichtungen zur Verbindung mit dem Modulträger, insbesondere den Aufnahmen für Arretierungsmittel, der Spleißmodule mit Schraubgewinden im Modulträger auf Deckung sind und dann Modulträger und Spleißmodul durch Einschrauben einer Schraube miteinander befestigt werden.

In besonderen Ausführungsformen können die seitlichen Arretierungsmittel zur Arretierung an oder Verbindung mit Befestigungs- oder Trägerkonstruktionen ausgestaltet sein als Aufnahmen für federgelagerte Stifte, insbesondere solche mit rundem Kopf, die dann beim Einführen des Moduls in die Befestigungs- oder Trägerkonstruktion eingedrückt werden und bei Erreichen der entsprechenden Position in Ausnehmungen an der Befestigungs- oder Trägerkonstruktion einrasten (können).

In bevorzugten Ausführungsformen der vorliegenden Erfindung werden die Steckerbuchsen der Gehäusefrontseite oder der frontseitigen Blenden unabhängig voneinander ausgewählt aus der Gruppe bestehend aus MMC, LC Duplex, MDC, MPO, SN, CS und Kombinationen derer, bevorzugt LC Duplex. Die genannten Bezeichnungen sind dem Fachmann geläufig und brauchen hier nicht näher definiert zu werden.

In manchen erfindungsgemäßen Varianten, wenn das Modul für das Durchspleißen verwendet werden soll, werden die Steckerbuchsen an der Spleißmodulvorderseite weggelassen, so dass es in diesem Fall keine Steckerbuchsen gibt. Es werden dann zwei mal 24 Fasern im Gehäuse angeordnet, die dann mittels Spleißen miteinander verbunden werden.

Ein weiterer Gegenstand der vorliegenden Erfindung ist ein Kit zur Herstellung von Spleißmodulen, insbesondere erfindungsgemäßen Spleißmodulen, umfassend
- Gehäusehauptteile umfassend Boden und beide Seitenwände;
- Gehäusehauptteile umfassend Boden, beide Seitenwände und Rückseite;
- Gehäusehauptteile umfassend Boden, beide Seitenwände, Front- und Rückseite;
- Gehäuseblenden für Front- bzw. Rückseite;
- Gehäusedeckel;
- Spleißkassetten umfassend Spleißhalter;
- Steckerbuchsen;
- Pigtails;
- Crimpspleißschutze;
- gegebenenfalls Scharniere.

Weiterhin ist Gegenstand der vorliegenden Erfindung die Verwendung der erfindungsgemäßen Spleißmodule oder der erfindungsgemäßen Verteilerfelder oder der mittels des erfindungsgemäßen Kits hergestellten Verteilerfelder in Kabelkanälen, Bodentanks oder in Consolidation Points bei der festen oder mobilen Verkabelung.

Nicht zuletzt Gegenstand der vorliegenden Erfindung sind modulare Verteilerfelder zur Verbindung mit weiteren modularen Verteilerfeldern oder mit weiterführenden Leitungen oder Endgeräten, welche aus Modulträgern und darin angeordneten erfindungsgemäßen Spleißmodulen oder mittels des erfindungsgemäßen Kits hergestellten Verteilerfelder, aufgebaut sind.

Bevorzugt werden Modulträger im Rahmen der vorliegenden Erfindung bei einer Einbaubreite von 19 Zoll und einer Einbauhöhe von 1 HE mit bis zu acht erfindungsgemäßen Spleißmodulen; bevorzugt ein, zwei, drei, vier, fünf, sechs, sieben oder acht erfindungsgemäßen Spleißmodulen, besonders bevorzugt zwei, vier oder acht erfindungsgemäßen Spleißmodulen, noch weiter bevorzugt vier oder acht erfindungsgemäßen Spleißmodulen, insbesondere acht erfindungsgemäßen Spleißmodulen, bestückt.

Bevorzugte Verteilerfelder der vorliegenden Erfindung enthalten bei einer Einbaubreite von 19 Zoll und einer Einbauhöhe von 1 HE bis zu acht erfindungsgemäße Spleißmodule; bevorzugt ein, zwei, drei, vier, fünf, sechs, sieben oder acht erfindungsgemäße Spleißmodule, besonders bevorzugt zwei, vier oder acht erfindungsgemäße Spleißmodule, noch weiter bevorzugt vier oder acht erfindungsgemäße Spleißmodule, insbesondere acht erfindungsgemäße Spleißmodule.

Mit den erfindungsgemäßen Vorrichtungen und Verfahren wird es mithin im Vergleich zum Stand der Technik ermöglicht, erheblich effizienter zu arbeiten.

Bei den erfindungsgemäßen Spleißmodulen treten die im Gehäuse befindlichen Lichtwellenleiter nicht an der Rückseite als ein fertig konfektioniertes Kabel (also mit Stecker versehen) heraus, sondern die Spleißadern (Lichtwellenleiter/Pigtails) liegen im Gehäuse bereit, um dann vor Ort gespleißt, also mit vor Ort befindlichen anderen Kabeln verbunden zu werden.

Gleichwohl ist es in manchen bevorzugten Ausführungsformen der vorliegenden Erfindung auch möglich einen Teil der im Gehäuse befindlichen Lichtwellenleiter bereits zu konfektionieren und diese mit einem oder mehreren Steckverbindern zu versehen, die an der Gehäuserückseite enden oder aus ihr herausführen/herausgeführt werden können und der Rest der im Gehäuse befindlichen Lichtwellenleiter in Form von bereitliegenden Spleißadern vorliegt.

Durch die erfindungsgemäßen Vorrichtungen und Verfahren ergeben sich einige signifikante Vorteile gegenüber dem bisherigen Stand der Technik, von denen einige, aber nicht alle, die folgenden sind:
- die erfindungsgemäßen Spleißmodule können bis zu 24, bevorzugt 13 bis 24, insbesondere genau 24, Lichtwellenleiter/Pigtails aufnehmen;
- mit den erfindungsgemäßen Spleißmodulen ist es möglich, in Modulträger von einer Höheneinheit und 19 Zoll Einbaubreite (19", 1HE) bis zu 192, bevorzugt 96 bis 192, insbesondere genau 192, Lichtwellenleiter/Pigtails bereitzustellen;
- die erfindungsgemäßen Spleißmodule können auf der Frontseite mit allen gängigen Lichtwellenleiter-Steckverbindern, zum Beispiel MMC, LC Duplex, MDC, MPO, SN, CS und Kombinationen derer, bevorzugt LC Duplex, ausgestattet sein/werden;
- die erfindungsgemäßen Spleißmodule können mit Festeinbau-Modulträgern genauso verwendet werden, wie mit Auszieh-Modulträgern;
- die erfindungsgemäßen Spleißmodule können dort eingesetzt werden, wo vorkonfektionierte Trunkkabel aufgrund größerer Längen oder zu enger Kabelwege nicht eingesetzt werden können;
- die erfindungsgemäßen Spleißmodule können in Kombination mit einseitig konfektionierten Trunkkabeln eingesetzt werden;
- die erfindungsgemäßen Spleißmodule können erfindungsgemäß mit anderen Modulen kombiniert werden, so dass vorkonfektionierte Kabel mit herkömmlicher Spleißtechnik kombiniert werden können;
- die erfindungsgemäßen Spleißmodule können erfindungsgemäß mit anderen Lichtwellenleiter-Modulen und/oder Cu-Leiter-Modulen in einem Modulträger kombiniert werden, so dass erfindungsgemäß eine Höheneinheit sehr effizient bestückt werden kann;
- das erfindungsgemäße Spleißmodul ermöglicht es, vor Ort zu spleißen, was eine erhebliche Flexibilität in der Anwendung bedeutet;
- das erfindungsgemäße Spleißmodul kann auch in Modulträgern und/oder Verteilern für ODF-Anwendungen eingesetzt werden.

Ein immenser Vorteil der Module und Modulträger der vorliegenden Erfindung ist die sehr hohe Modularität des daraus gebildeten Systems. Die acht 0,5 HE-Module, die in die Modulträger eingesetzt werden können, sind in diesem System beliebig bestückbar, so dass quasi beliebige Kombinationen von Anschlüssen in einem Modulträger kombiniert werden können. Es ist damit ohne weiteres möglich, Module mit zum Beispiel MPO-Anschlüssen mit Modulen mit RJ-45-Anschlüssen und mit den erfindungsgemäßen Spleißmodulen in einem einzigen Modulträger zu kombinieren. Man kann mithin sehr hohe Packungsdichten mit hoher Variabilität kombinieren und bei Bedarf jederzeit anpassen.

Mit den erfindungsgemäßen Spleißmodulen ist es möglich auf einer Höheneinheit bis zu 192 spleißfähige Lichtwellenleiter zu erhalten, die dann vor Ort mit den vor Ort gegebenen Lichtwellenleitern gespleißt und verbunden werden können.

Solch hohe Packungsdichten waren aus dem bisherigen Stand der Technik weder bekannt noch mit bekannten 0,5 HE-Modulen erreichbar.

Mit den erfindungsgemäßen Spleißmodulen gewinnt der Anwender vor Ort ein erhebliches zusätzliches Maß an Flexibilität, was mit den Modulen des Standes der Technik bisher nicht möglich war.

Der Fachmann kann die genaue Ausgestaltung der beschriebenen Spleißmodule, sofern diese in dieser Beschreibung nicht explizit beschrieben sind, wie beispielsweise Wanddicken, Materialien etc. im Rahmen seines allgemeinen Fachwissens vornehmen.

Es sei darauf hingewiesen, dass in der vorliegenden Anmeldung von Blenden geredet wird, die zu den Spleißmodulgehäusen gehören können. Zwar ist es erfindungsgemäß bevorzugt, wenn dies eigenständige Werkstücke sind, jedoch ist dies nicht zwingend der Fall.

Es sei darauf hingewiesen, dass in bevorzugten Varianten der vorliegenden Erfindung die Spleißmodulgehäuse und Spleißkassetten aus Metall, insbesondere Blech, gefertigt sind.

In anderen bevorzugten Varianten der vorliegenden Erfindung sind die Spleißmodulgehäuse aus Kunststoff gefertigt.

In anderen bevorzugten Varianten der vorliegenden Erfindung sind alternativ oder zusätzlich die Spleißkassetten aus Kunststoff gefertigt.

Dies kann jeweils die kompletten Spleißmodule betreffen, oder einzelne oder mehrere Elemente aus der Gruppe bestehend aus Modulgehäusehauptelementen, Blenden und Deckeln.

Sofern bei der Beschreibung der erfindungsgemäßen Vorrichtungen Teile oder die ganze Vorrichtung als "bestehend" aus gekennzeichnet sind, ist darunter zu verstehen, dass sich dies auf die genannten wesentlichen Bestandteile bezieht. Selbstverständliche oder inhärente Teile wie zum Beispiel Schrauben oder Nieten sind dadurch nicht ausgeschlossen.

Die verschiedenen Ausgestaltungen der vorliegenden Erfindung, z.B. - aber nicht ausschließlich - diejenigen der verschiedenen abhängigen Ansprüche, können dabei in beliebiger Art und Weise miteinander kombiniert werden, sofern solche Kombinationen sich nicht widersprechen.

### Figurenbeschreibung:

Die vorliegende Erfindung wird im Folgenden mit Bezugnahme auf die Zeichnungen näher erläutert. Die Zeichnungen sind dabei nicht limitierend auszulegen und nicht maßstabsgetreu. Die Zeichnungen sind schematisch und sind auf die für die vorliegende Erfindung und ihr Verständnis wesentlichen Merkmale reduziert, beispielsweise sind Schrauben etc. nicht oder nicht im Detail dargestellt.

Gleiche Bezugszeichen zeigen in der Figur, der Beschreibung und den Ansprüchen gleiche Merkmale.

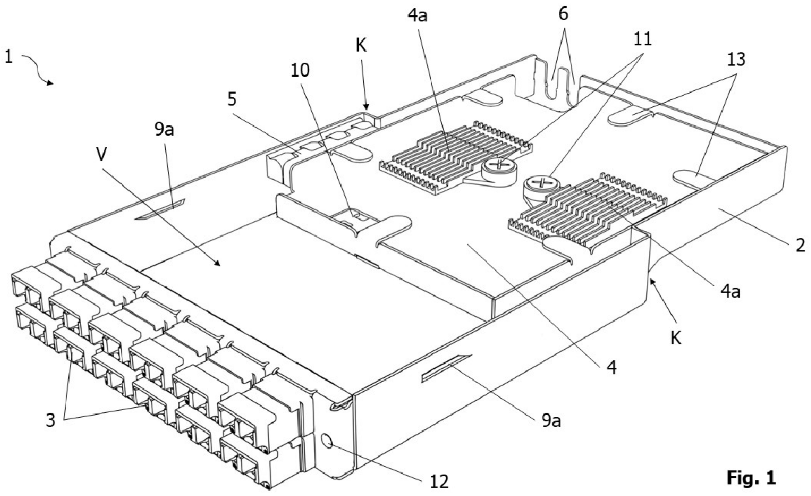

Figur 1 zeigt ein erfindungsgemäßes Spleißmodul 1 ohne aufgesetzten Gehäusedeckel in einer Frontansicht von schräg oben. In dieser Figur, wie auch in den anderen

Figuren, sind der besseren Erkennbarkeit halber die Lichtwellenleiter bzw. Pigtails nicht gezeigt.

In der Figur gut zu erkennen ist die längliche Ausgestaltung des Spleißmoduls **1** inklusive der passiven Klemmvorrichtungselemente **K** an den beiden Seitenwänden des Gehäuses **2,** die in dieser Illustration etwa bei 60% der Gesamtlänge des Spleißmoduls liegen. An der Vorderseite des Spleißmoduls sind zwei übereinander angeordneten Reihen von jeweils sechs Doppelsteckerkupplungen **3** dargestellt; in diesem Falle sind LC Duplex Kupplungen illustriert, es können aber natürlich auch andere Steckerkupplungen sein. An der Gehäuserückseite sind zwei Anschlussbuchsen/Einführungen (zum Beispiel für Flexschläuche oder Röhrchen) **6** gezeigt, durch die vor Ort entsprechende Lichtwellenleiter eingeführt werden können, die dann mit dem in dem Gehäuse vorhandenen, bereitgestellten Lichtwellenleitern/Pigtails verspleißt werden und abgelegt werden können. Obwohl in dieser Figur zwei dieser Anschlussbuchsen/Einführungen **6** gezeigt werden, ist es erfindungsgemäß selbstverständlich auch möglich, stattdessen vier oder eine oder beliebige andere Zahlen an Buchsen in der Rückseite des Spleißmodulgehäuses vorzusehen. Im vorderen Teil der Seitenwände des Gehäuses sind Positionierungshilfen (und Auflagen) für den Gehäusedeckel **9a** zu sehen, die in dem hier dargestellten Beispiel der weibliche Teil einer Steckverbindung sein können, d.h. im hier gezeigten Beispiel ist in der Gehäusewand eine Brücke ausgestanzt, die entsprechend jeweils eine Blechzunge des Deckels aufnimmt.

Es ist ebenfalls zu sehen, dass der Boden des hinteren Teils des Gehäuses **2** im Vergleich zu dem vorderen Teil höher gelegen ist, d.h. der Boden des hinteren Teils ist parallel zu dem Boden des vorderen Teils aber näher in Richtung Gehäuseoberseite versetzt.

Weiterhin ist in diesen dieser Figur die in dem Gehäuse **2** angeordnete Spleißkassette **4** dargestellt, die über ein Scharnier **5** mit dem Gehäuse **2** des Spleißmoduls **1** verbunden ist. Auf der Spleißkassette **4** sind in diesem Beispiel zwei Spleißhalter **4a** gezeigt, die über Befestigungsvorrichtungen **11** zum Befestigen der Spleißhalter **4a** an der Spleißkassette **4** befestigt sind, welche hier beispielhaft als Schrauben dargestellt sind. Allerdings ist es auch möglich, statt Schrauben andere Verbindung zu nehmen, wie beispielsweise Nieten oder Rastverbinder; grundsätzlich ist es im Rahmen der vorliegenden Erfindung auch möglich, die Spleißhalter **4a** auf der Spleißkassette **4** festzukleben oder zu verschweißen, bzw. die Spleißkassette **4** inklusive der Spleißhalter **4a** direkt einstückig zu fertigen (zum Beispiel mittels 3D-Druck). Weiterhin ist in dieser Figur dargestellt, dass die Spleißkassette **4** Anordnungshilfen **13** für Lichtwellenleiterleiter aufweist. Im gezeigten Beispiel sind diese als Laschen **13** ausgeführt und es sind sechs Stück davon dargestellt, wobei eine andere Anzahl oder andere Ausgestaltungen ebenfalls möglich sind. Wie dem Fachmann bekannt ist, können die Lichtwellenleiterleiter/Pigtails bzw. die Überlängen der Lichtwellenleiterleiter/Pigtails in der Spleißkassette **4** spiralförmig aufgerollt werden (unter Beachtung derer Mindestbiegeradien), wobei die Anordnungshilfen (Laschen) **13** dabei helfen, die Überlängen/Lichtwellenleiter zu ordnen. Schließlich ist in diesem Beispiel noch dargestellt, dass die Spleißkassette **4** Ausstanzungen/Ausnehmungen/Laschen **10** aufweisen kann, an denen die Lichtwellenleiter/Pigtails bzw. deren Überlängen zum Beispiel mittels Kabelbindern fixiert werden können, um ein weiteres Verrutschen zu vermeiden.

Wie aus Figur 1 ebenfalls ersichtlich ist, ist in dem Gehäuse **2** ein freies Volumen **V** gegeben, in welchem die Überlängen der vorgesehenen Pigtails angeordnet werden können. Aus diesem "Vorratsvolumen" können die Enden der Pigtails (Lichtwellenleiterenden) nach oben auf die Spleißkassette **4** geführt werden, wo dann nach dem Spleißen mit den von außen zugeführten Lichtwellenleitern die neu hergestellten Verbindungen in den Spleißhaltern **4a** abgelegt werden können. Obwohl es in der Figur nicht dargestellt ist, ist dem Fachmann bekannt, dass diese Spleißungen zum Beispiel über Fusionsspleißen erfolgen können und dann die gespleißten Lichtwellenleiter mit einem Spleißschutz in der jeweiligen Spleißablage der Spleißhalter **4a** abgelegt werden können. Andere Spleißverfahren sind jedoch entsprechend auch möglich. Durch die hier in Figur 1 gezeigte Struktur des Spleißmoduls **1** ist die Spleißkassette **4** im vorderen Bereich des Spleißmoduls nicht breit genug, um bis an die Seitenwände des Gehäuses **2** zu reichen, so dass dies ausgenutzt werden kann, um die Überlängen der Pigtails (Lichtwellenleiter) in der Zeichnung links vor dem Scharnier **5** nach oben zu führen.

Schließlich ist in Figur 1 auf der Vorderseite des Spleißmoduls **1** noch eine Aufnahme für ein Arretierungshilfsmittel **12** als Teil der Vorrichtung zur Verbindung mit dem Modulträger illustriert. In der vorliegenden Figur ist ein einfaches Loch **12** illustriert, in welches dann ein Führungsstift des Modulträgers eingreifen könnte; die Aufnahme für das Arretierungshilfsmittel **12** ist in dieser Figur also der weibliche Teil der Vorrichtung zur Verbindung mit dem Modulträger. Diese Vorrichtung wirkt zusammen mit den passiven Klemmvorrichtungselementen **K** auf beiden Seiten des Gehäuses **2,** derart, dass das Modul **1** von hinten in einen Modulträger eingeführt werden kann, und vorn mittels der Aufnahmen für Arretierungshilfsmittel **12** in Eingriff mit dem Modulträger tritt. Die Fixierung an Ort und Stelle kann dann in diesem Falle darüber erfolgen, das beispielsweise Klemmen, Klammern oder Federn, die in dem Modulträger montiert sind, hinter der passiven Klemmvorrichtung **K** einrasten und mithin das Spleißmodul **1** an Ort und Stelle fixieren.

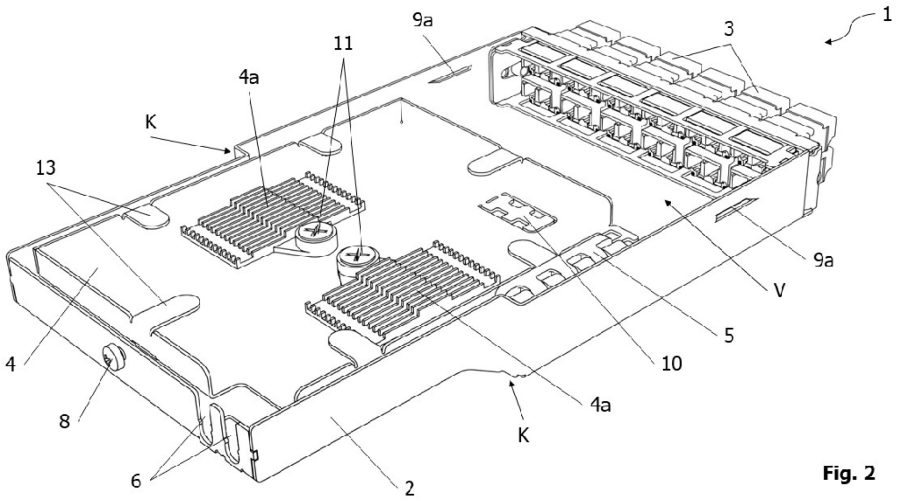

Figur 2 zeigt ein erfindungsgemäßes Spleißmodul **1 ohne** aufgesetzten Gehäusedeckel in einer Rückansicht von schräg oben. Entsprechend haben die dargestellten Elemente die gleiche Bedeutung, wie in Figur 1.

In Figur 2 ist zusätzlich illustriert, wie die LC Duplex-Steckerkupplungen **3** von innen gesehen ausgestaltet sein können. Dies ist rein illustrativ und nicht einschränkend, da deren genaue Ausgestaltung z.B. von Hersteller zu Hersteller etwas unterschiedlich sein kann; ebenso sehen die Steckerkupplungen von Innen anders aus, wenn keine LC Duplex-Kupplungen verwendet werden, sondern andere.

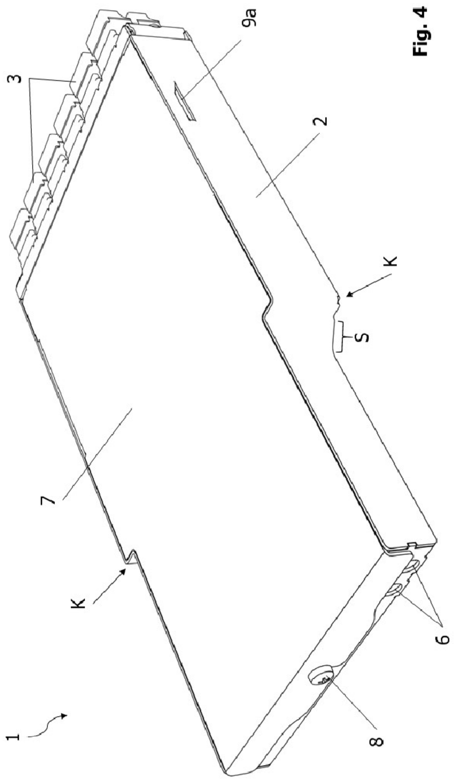

In dieser Figur zu sehen ist eine Deckelbefestigungsvorrichtung **8,** die hier als vorstehende Schraube (bzw. Schraubenkopf) dargestellt ist. Wenn der Deckel **7** des Gehäuses aufgesetzt wird und mit seinen Positionierungshilfen **9** (hier natürlich nicht gezeigt) in die Positionierungshilfen **9a** des Gehäuses **2** eingreift, kommt gleichzeitig am rückwärtigen Teil des Gehäuses **2** eine Lasche (oder etwas Ähnliches) des Deckels **7** im Bereich der Schrauben **8** zu liegen. Wenn dann der Deckel **7** an dem Gehäuse **2** fixiert werden soll, wird von hinten eine Schraube **8** (siehe auch Figur 4) eingedreht und der Deckel **7** über die Schraube an der rückwärtigen Seite des Gehäuses **2** festgeklemmt. Um bei wiederholten Öffnungsbedarf des Gehäuses **2** nicht jedes Mal die Schraube gänzlich abschrauben zu müssen, ist es erfindungsgemäß bevorzugt, hier eine Langlochschraubverbindung zu nutzen. Es ist aber auch genauso gut möglich hier als Gegenstück zur Deckelbefestigungsvorrichtung lediglich eine Bohrung vorzusehen oder ein nur in der Gehäuserückwand liegendes Innengewinde, und in der Lasche des Deckels **7** ebenfalls nur eine Bohrung oder ein Gewinde, so dass beide Teile fest miteinander verschraubt, verklemmt, vernietet o.ä. werden können; der Effekt ist aber im Wesentlichen der gleiche wie bei einer Langlochschraubverbindung und es kommt hier nur darauf an, dass der Deckel **7** an dem Gehäuse **2** derart fixiert wird, dass er auch bei einem Umdrehen des Spleißmoduls **1** nicht abfallen kann.

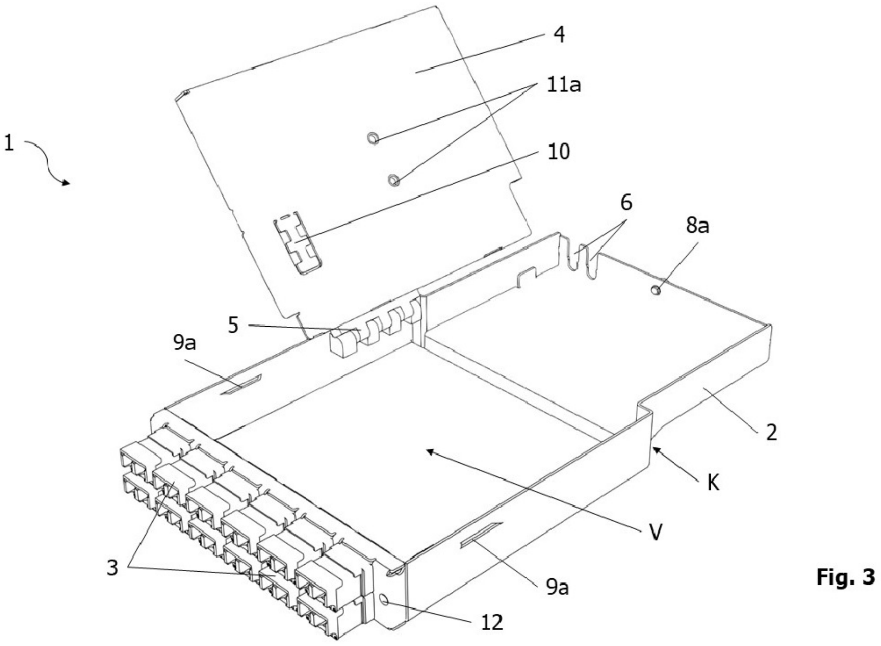

Es ist in der Figur 2 zwar nicht zu erkennen, aber es ist erfindungsgemäß möglich, und in einigen Varianten bevorzugt, nicht nur Deckel **7** und Gehäuse **2** miteinander zu fixieren, sondern zusätzlich noch die Spleißkassette **4** (vgl. Figur 3).

Figur 3 zeigt wiederum das gleiche Spleißmodul **1,** in einer ähnlichen Darstellung wie in Figur 1, wobei diesmal jedoch die Spleißkassette **4** mit Hilfe des Scharniers **5** nach oben geschwenkt ist und einen Blick in das leere Gehäuse **2** freigibt. Im Unterschied zu Figur 1 ist hier ein Gegenstück zur Deckelbefestigungsvorrichtung **8a** in der rückwärtigen Wand des Gehäuses **2** zu erkennen. Zudem ist in dieser Darstellung im Boden der Spleißkassette **4** zu sehen, dass hier zwei Gegenstücke **11a** zur Befestigungsvorrichtung des Spleißhalters **4a** an der Spleißkassette **4** vorhanden sind, im gezeigten Falle Schraublöcher (Gewinde). Wie bereits oben zu Figur 1 dargelegt, sind diese optional und deren Vorhandensein hängt davon ab, auf welche Art und Weise die Spleißhalter **4a** auf der Spleißkassette **4** befestigt werden. Ebenso ist deren Position natürlich abhängig davon, welcher Art die Spleißhalter **4a** sind, d.h. welche geometrische Form diese genau aufweisen und an welcher Stelle der Spleißkassette **4** sie befestigt werden.

Figur 4 zeigt die Spleißkassette **1** in der gleichen Ansicht wie in Figur 2, lediglich der Gehäusedeckel **7** ist in dieser Darstellung aufgebracht, so dass kein Blick in das Innere des Spleißmoduls **1** mehr möglich ist. Ebenfalls zu sehen sind in dieser Ansicht auch noch einmal die passiven Klemmvorrichtungselemente **K.**

Ferner ist in dieser Figur eine Variante der vorliegenden Erfindung dargestellt, bei der der Übergang von der modulvorderen Bodenfläche zur hinteren Modulbodenfläche mit einem kurzen abgeschrägten Stück **S** erfolgt. Es ist erfindungsgemäß ebenso gut möglich, diese Schräge bis ganz nach hinten durchzuziehen oder aber eine 90°-Stufe zu verwenden oder ähnliche Ausführungsformen. Wesentlich ist es für die Ausführungsformen der vorliegenden Erfindung, in denen die Bodenfläche des Spleißmoduls nicht gänzlich durchgängig auf eine Höhe ist, lediglich, dass die Bodenfläche des hinteren Modulteils höher liegt als die Bodenfläche des vorderen Modulteils. Auch die Fälle, bei denen die Bodenfläche des Spleißmoduls von vorne bis hinten durchgängig ist und das hintere Ende nicht höher liegt als das vordere, sind ausdrücklich ebenfalls erfindungsgemäße Ausführungsformen, allerdings in Varianten weniger bevorzugt.

Schließlich ist in dieser Figur noch die Deckelbefestigungsvorrichtung **8** zu sehen, im dargestellten Beispiel eine Schraube, mit der der Deckel **7** an dem Gehäuse **2** des Spleißmoduls 1 festgeklemmt wird.

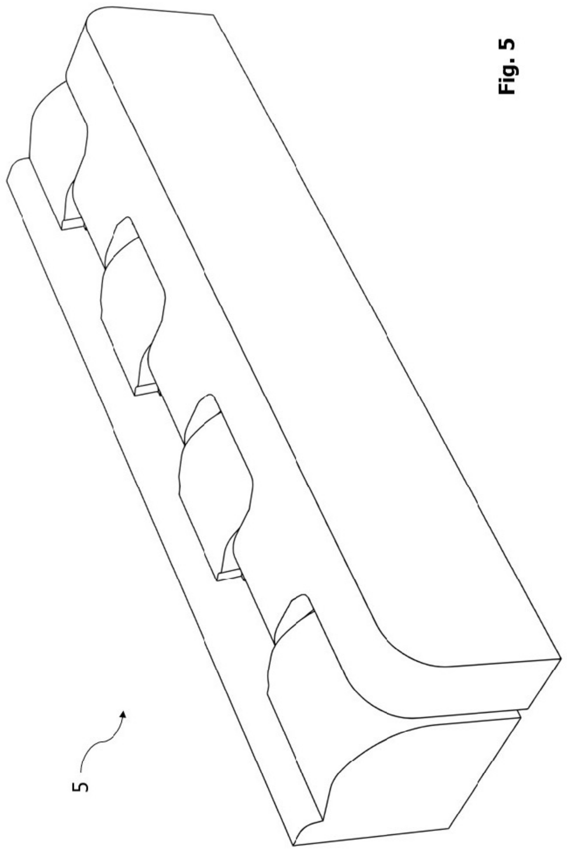

Figur 5 zeigt ein Scharnier **5,** womit die Spleißkassette **4** an dem Gehäuse **2** befestigt werden kann. Die dargestellte Ausführungsform des Scharniers ist nur beispielhaft; es können, falls überhaupt eingesetzt, quasi beliebige Scharniere eingesetzt werden, solange diese in ihren Dimensionen so angepasst sind, dass sie zwischen Spleißkassette **4** und Gehäuse **2** angeordnet/montiert werden können.

### Bezugszeichenliste:

- 1: Spleißmodul
- 2: Gehäuse
- 3: Steckerkupplung
- 4: Spleißkassette
- 4a: Spleißhalter
- 5: Scharnier
- 6: Anschlussbuchsen/Einführungen (für zum Beispiel Flexschläuche oder Röhrchen)
- 7: Deckel (des Gehäuses)
- 8: Deckelbefestigungsvorrichtung (zum Beispiel Schraube)
- 8a: Gegenstück zur Deckelbefestigungsvorrichtung (zum Beispiel Schraubenaufnahme bzw. Gewinde)
- 9a: Positionierungshilfen (für den Gehäusedeckel, zum Beispiel weiblicher Teil bzw. (ausgestanzte) Brücke)
- 10: Ausstanzungen oder Laschen (zur Befestigung der Lichtwellenleiter)
- 11: Befestigungsvorrichtung (zum Beispiel Schraubverbindung) von Spleißhalter an Spleißkassette
- 11a: optionales Gegenstück zur Befestigungsvorrichtung von Spleißhalter an Spleißkassette (zum Beispiel Schraubenaufnahme bzw. Gewinde)
- 12: Vorrichtungen zur Verbindung mit dem Modulträger (Aufnahme für Arretierungsmittel)
- 13: Anordnungshilfen für Lichtwellenleiter auf Spleißkassette (zum Beispiel Laschen)
- K: passives Klemmvorrichtungselement
- S: schräges Stück des Gehäusebodens (Übergang vom vorderen, tieferen Teil zum hinteren, höher gelegenen Teil)
- V: freies Volumen (im Modulgehäuse, zum Teil unter der Spleißkassette)

## Patentansprüche

1. Spleißmodul (1), dass so dimensioniert ist, dass acht solche in einen Modulträger von 19" Breite und einer Höheneinheit eingebaut werden können, umfassend
- ein Gehäuse (2), konfiguriert in seinem Inneren bis zu 24 Lichtwellenleiter aufzunehmen;
- optional bis zu 24 im Inneren des Spleißmoduls (1) angeordnete und mit einer gleichen Anzahl frontseitiger Steckerkupplungen (3) verbundene Lichtwellenleiter;
- eine im Inneren des Moduls angeordnete Spleißkassette (4) mit mindestens einem Spleißhalter (4a);
- an der rückwärtigen Seite des Gehäuses (2) ein oder mehrere Anschlussbuchsen/Einführungen (6) für Flexschläuche oder Röhrchen.

2. Spleißmodul (1) nach Anspruch 1, **dadurch gekennzeichnet, dass** das Gehäuse oben öffenbar ist und sein Deckel (7) bevorzugt aufgelegt und nur an der Gehäuserückseite durch eine Deckelbefestigungsvorrichtung (8) befestigt wird, und wobei der Deckel (7) Positionierungshilfen (9) aufweisen kann.

3. Spleißmodul (1) nach einem der vorhergehenden Ansprüche, **dadurch gekennzeichnet, dass** die Spleißkassette (4) als entfernbares oder klappbares Element ausgestaltet ist.

4. Spleißmodul (1) nach einem der vorhergehenden Ansprüche, **dadurch gekennzeichnet, dass** unter der Spleißkassette (4) im Gehäuse (2) freies Volumen (V) gegeben ist, in dem Überlängen der Lichtwellenleiter/Pigtails zumindest zum Teil abgelegt werden können.

5. Spleißmodul (1) nach einem der vorhergehenden Ansprüche, **dadurch gekennzeichnet, dass** die Spleißkassette (4) als hochklappbares Blech ausgestaltet ist, wodurch das Spleißmodul (1) bevorzugt in zwei Ebenen unterteilt wird.

6. Spleißmodul (1) nach einem der vorhergehenden Ansprüche, **dadurch gekennzeichnet, dass** die Spleißkassette (4) konfiguriert ist, zwei oder mehr, bevorzugt zwei, Spleißhalter (4a) aufzuweisen, die optional jeweils variabel angeordnet werden können, bevorzugt über jeweilige Befestigungsvorrichtungen (11) von Spleißhalter an Spleißkassette, bevorzugt Schraubverbindungen.

7. Spleißmodul (1) nach einem der vorhergehenden Ansprüche, **dadurch gekennzeichnet, dass** der Gehäuseboden am rückwärtigen Gehäuseende höher gelegen ist als an der Frontseite des Gehäuses.

8. Spleißmodul (1) nach einem der vorhergehenden Ansprüche, **dadurch gekennzeichnet, dass** das Gehäuse an der Frontseite zwei oder mehr, bevorzugt zwei, Vorrichtungen zur Verbindung mit dem Modulträger (12) aufweist, bevorzugt Aufnahmen für Arretierungsmittel, besonders bevorzugt Löcher, zum Beispiel Rastlöcher oder Gewindelöcher.

9. Spleißmodul (1) nach einem der vorhergehenden Ansprüche, **dadurch gekennzeichnet, dass** die Spleißkassette eines oder mehrere der Merkmale
- ein oder mehr Ausstanzungen oder Laschen (10) zur Befestigung der Lichtwellenleiter, zum Beispiel mittels Kabelbindern;
- zwei oder mehr Anordnungshilfen (13) für Lichtwellenleiter auf der Spleißkassette;
- eine Scharniervorrichtung (5) zur schwenkbaren Verbindung mit dem Gehäuse;
aufweist.

10. Spleißmodul (1) nach einem der vorhergehenden Ansprüche, **dadurch gekennzeichnet, dass** die Gehäuseseiten jeweils mindestens ein passives Klemmvorrichtungselement (K), bevorzugt Vertiefungen oder einen in Richtung Gehäusemitte vertieften Absatz, aufweisen, insbesondere so konfiguriert, dass zur Arretierung des Spleißmoduls (1) Federn oder Klammern eines Modulträgers eingreifen oder einrasten können.

11. Bestückter 19" 1HE-Modulträger umfassend bis zu 192 Lichtwellenleiter in bis zu acht Spleißmodulen (1) gemäß einem der Ansprüche 1 bis 10 enthaltend jeweils bis zu 24 Lichtwellenleiter/Pigtails.

12. Kit zur Herstellung von Spleißmodulen, insbesondere gemäß einem der Ansprüche 1 bis 10, umfassend
- Gehäusehauptteile umfassend Boden und beide Seitenwände;
- Gehäusehauptteile umfassend Boden, beide Seitenwände und Rückseite;
- Gehäusehauptteile umfassend Boden, beide Seitenwände, Front- und Rückseite;
- Gehäuseblenden für Front- bzw. Rückseite;
- Gehäusedeckel;
- Spleißkassetten umfassend Spleißhalter;
- Steckerbuchsen;
- Lichtwellenleiter, insbesondere Pigtails;
- Crimpspleißschutze;
- gegebenenfalls Scharniere

13. Verwendung der Spleißmodule (1) gemäß einem der Ansprüche 1 bis 10 in Modulträgern, Verteilerfeldern bei und für festen und/oder mobile Verkabelungen.
